# EUROPEAN PATENT SPECIFICATION

(11) **EP 4 280 799 B1**
(45) Date of publication and mention of the grant of the patent: **29.07.2026**
(21) Application number: 21918275.5
(22) Date of filing: 13.01.2021
(51) Int. Cl.: H04L 1/1822, H04L 1/1829, H04L 1/1867, H04L 5/00, H04W 52/02, H04W 76/28, H04W 76/14, H04W 92/18, H04W 72/25

(54) **DATA RECEIVING APPARATUSES**
DATENEMPFANGSVORRICHTUNGEN
APPAREILS DE RÉCEPTION DE DONNÉES

(43) Date of publication of application: 22.11.2023
(73) Proprietor: 1FINITY Inc., Kawasaki-shi, Kanagawa 211-8588 (JP)
(72) Inventor: JI, Pengyu, Beijing 100022 (CN); ZHANG, Jian, Beijing 100022 (CN); LI, Guorong, Beijing 100022 (CN); ZHANG, Lei, Beijing 100022 (CN); WANG, Xin, Beijing 100022 (CN)
(74) Representative: Haseltine Lake Kempner LLP
(86) International application number: PCT/CN2021/071529
(87) International publication number: WO 2022/151060

(56) References cited:
- EP-A1- 3 855 860
- EP-A1- 4 192 173
- EP-A1- 4 218 309
- EP-A1- 4 236 598
- EP-A1- 4 262 288
- EP-A1- 4 274 348
- CN-A- 111 556 590
- CN-A- 111 567 070
- CN-A- 111 800 893
- US-A1- 2020 344 722
- US-A1- 2020 344 722
- HUAWEI ET AL: "Discussion on remaining MAC open issues for 5G V2X with NR SL", vol. RAN WG2, no. electronic; 20200601 - 20200612, 22 May 2020 (2020-05-22), XP051888819, Retrieved from the Internet <URL:https://ftp.3gpp.org/tsg_ran/WG2_RL2/TSGR2_110-e/Docs/R2-2005492.zip R2-2005492 Discussion on remaining MAC Open issues for 5G V2X with NR SL.doc> [retrieved on 20200522]
- FUJITSU: "Considerations on partial sensing in NR V2X", 3GPP DRAFT; R1-2007787, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 23 October 2020 (2020-10-23), Mobile Competence Centre ; 650, route des Lucioles ; F-06921 Sophia-Antipolis Cedex ; France , XP051945291

## Description

### Field

This disclosure relates to the field of communication technologies.

### Background

In existing standards, discontinuous reception (DRX) may be configured on a Uu link for a terminal equipment to achieve a goal of enabling the terminal equipment to save power. A semi-statically periodically running timer, referred to as *drx-OnDurationTimer,* may be configured for the terminal equipment, and during running of the timer, the terminal equipment needs to perform blind detection on a downlink control channel (PDCCH); and in the rest of the time, the terminal equipment may not perform detection on the PDCCH, and may even turn off a receiving radio frequency based on implementation, so as to achieve a goal of saving power.

On the other hand, based on a semi-statically periodically running DRX mechanism, Uu DRX also introduces a timer started to run based on an event, which, when a condition is satisfied, is able to dynamically enable the terminal equipment to be switched to active state to perform blind detection on a PDCCH. Specifically, the terminal equipment may be dynamically set to be in active state according to *drx-RetransmissionTimerDL* or *drx-RetransmissionTimerUL* configured per HARQ process, which are used respectively to detect PDCCHs scheduling retransmissions on a downlink (DL) and an uplink (UL). Based on the above Uu DRX operating mechanism, the terminal equipment is able to be in active state at a time when a network device possibly schedules retransmissions, thereby ensuring that the terminal equipment is able to detect and receive PDCCHs scheduling retransmissions.

The document 3GPP R2-2005492: "Discussion on remaining MAC open issues for 5G V2X with NR SL", by Huawei et al., 3GPP TSG-RAN WG2 Meeting #110 electronic, 1-12 June 2020, discusses a case where the RX UE dropped the PSFCH transmission when there is overlapped UL transmission which has a higher priority.

United States Patent Application Publication US 2020/0344722 A1 relates to apparatuses and methods for obtaining and providing hybrid automatic repeat request acknowledgement (HARQ-ACK) information. A method for providing HARQ-ACK information includes receiving a configuration for a slot offset value and receiving a physical sidelink shared channel (PSSCH) over a number of sub-channels in a first slot. The PSSCH includes a transport block (TB). The method includes determining a second slot as an earliest slot with resources for transmission of a physical sidelink feedback channel (PSFCH) that is after the first slot by a number of slots equal to the slot offset value, The PSFCH includes the HARQ-ACK information that is in response to reception of the TB. The method further includes transmitting the PSFCH in the second slot.

### Summary

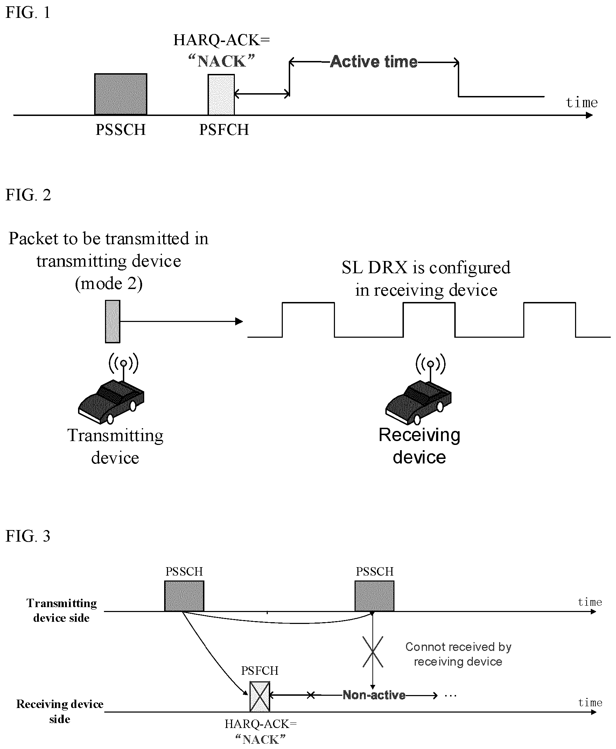

It was found by the inventors that in the Rel-17 (Release 17) sidelink enhancement project, further enhancements need to be made to the sidelink transmission based on NR (New Radio) technology. One important goal thereof is to study and design the power saving mechanism of certain terminal equipments on the sidelink, such as handheld terminal equipments (P-UEs). The DRX mechanism, as an effective energy-saving mechanism applied in a Uu interface, may be reused on the sidelink as a baseline. When a resource pool is configured with a PSFCH (physical sidelink feedback channel) and HARQ-ACK (hybrid automatic repeat request acknowledgement) is enabled, a receiving device needs to be able to be in active state when a transmitting device transmits retransmission in a case where NACK is fed back, as shown in FIG. 1, so as to correctly receive retransmitted packets and correctly decode a current transport block (TB). Otherwise, reliability of packet transmission may be affected; or, ACK needing to be transmitted should be timely fed back, so that the transmitting device is able to terminate transmission of the current transport block in advance, thereby avoiding unnecessary retransmission.

In order to solve at least one of the above problems, embodiments of this disclosure provide data reception apparatuses. The invention is defined in the independent claims. Specific embodiments are defined in the dependent claims.

An advantage of the embodiments of this disclosure exists in that on the one hand, it can ensure that the receiving device is able to receive the transmission of next retransmission in a case where the value that should have been fed back via the PSFCH is "NACK", thereby ensuring reliability of receiving the corresponding TB; and on the other hand, in a case where the value that should have been fed back via the PSFCH is "ACK", the transmitting device is enabled as soon as possible to clear data packets in the buffer to which the current TB corresponds, thereby avoiding unnecessary retransmission.

With reference to the following description and drawings, the particular embodiments of this disclosure are disclosed in detail, and the principle of this disclosure and the manners of use are indicated. It should be understood that the scope of the embodiments of this disclosure is not limited thereto.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.
FIG. 1 is schematic diagram of behaviors of a receiving device configured with SL DRX for retransmission;
FIG. 2 is a schematic diagram of an application scenario of an embodiment of this disclosure;
FIG. 3 is a schematic diagram of that retransmission is not received due to that a PSFCH carrying NACK is dropped;
FIG. 4 is a schematic diagram of unnecessary retransmission due to that a PSFCH carrying ACK is dropped;
FIG. 5 is a schematic diagram of possible scenarios where the PSFCH is not transmitted;
FIG. 6 is a schematic diagram of the data reception method of an embodiment of this disclosure;
FIG. 7 is a schematic diagram of a case where a result that should be fed back is NACK when collision occurs in the PSFCH;
FIG. 8 is a schematic diagram of a case where a result that should be fed back is ACK when collision occurs in the PSFCH;
FIG. 9 is another schematic diagram of the data reception method of the embodiment of this disclosure;
FIG. 10 is a further schematic diagram of the data reception method of the embodiment of this disclosure;
FIG. 11 is a schematic diagram of a case where a result that should be fed back is ACK and a second timer is not started when collision occurs in the PSFCH;
FIG. 12 is a schematic diagram of the data reception apparatus of an embodiment of this disclosure;
FIG. 13 is another schematic diagram of the data reception apparatus of the embodiment of this disclosure;
FIG. 14 is a further schematic diagram of the data reception apparatus of the embodiment of this disclosure; and
FIG. 15 is a schematic diagram of the terminal equipment of an embodiment of this disclosure.

### Detailed Description

These and further aspects and features of this disclosure will be apparent with reference to the following description and attached drawings.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and New Radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

In the above embodiments, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "a terminal equipment (TE) or terminal device" refers to, for example, an equipment accessing to a communication network and receiving network services via a network device. The terminal equipment may be fixed or mobile, and may also be referred to as a mobile station (MS), a terminal, a subscriber station (SS), an access terminal (AT), and a station, etc.

In the above embodiments, the terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. In this text, "device" may refer to a network device, and may also refer to a terminal equipment, except otherwise specified.

Scenarios of the embodiments of this disclosure shall be described below by way of examples; however, this disclosure is not limited thereto.

FIG. 2 is a schematic diagram of an application scenario of an embodiment of this disclosure. As shown in FIG. 2. In this scenario, a transmitting device (Tx UE) operates in mode 2, a receiving device (Rx UE) is configured with SL DRX, and the transmitting device transmits data packets to the receiving device by way of unicast. It should be noted that a unicast scenario is taken as an example in FIG. 2; however, this disclosure is not limited thereto, and the embodiment of this disclosure is also applicable to multicast or broadcast scenarios.

In the RAN2 (Radio Access Network Group 2) 112-e conference, at least for unicast scenarios, it was agreed to reuse the timer-based mechanism in the Uu interface to control the SL DRX behavior mechanism of the receiving device, that is, on the sidelink, the SL DRX mechanism of the receiving device is controlled by such timers as *SL-drx-OnDurationTimer, SL-drx-InactivityTimer, SL-drx-HARQ-RTT-Timer,* and *SL-drx-RetransmissionTimer,* etc. For a case where a resource pool is configured with a PSFCH and HARQ-ACK is enabled, the DL mechanism reusing Uu DRX is an effective method with relatively small workload of standardization. However, for retransmission-related SL DRX behaviors, the PSFCH is not transmitted or is omitted due to its low priority, which is a situation needing to be specially considered in specifying SL DRX behaviors, because in Uu DRX, if discontinuous transmission (DTX) occurs in a PUCCH, a base station needs to decide whether to perform retransmission based on implementations, and a terminal may also decide whether to switch to "active" state based on the implementations; however, in the sidelink, when the transmitting device operates in mode 2, the transmitting device determines the number of times of transmission when resource selection is triggered, and it does not cancel subsequent transmission, unless it receives the ACK, hence, the problem cannot be solved through implementations.

For example, as shown in FIG. 3, if the receiving device does not correctly decode the received sidelink data, that is, when information carried by the originally transmitted PSFCH is "NACK", but the PSFCH is not transmitted for some reasons, if the receiving device is in "non-active" state after feeding back "NACK", the receiving device is unable to receive the retransmitted data packets, which will lead to degradation of reliability.

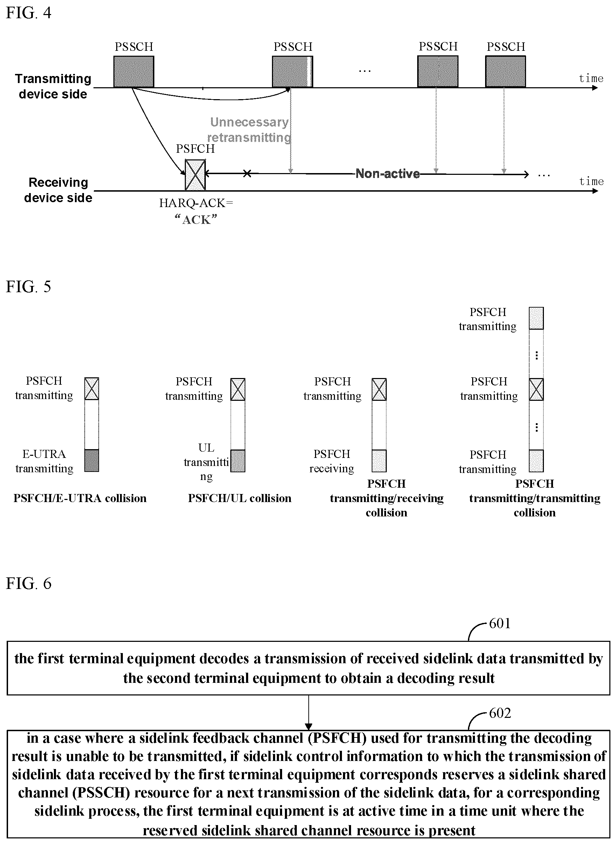

For another example, as shown in FIG. 4, if the receiving device correctly decodes the received sidelink data, that is, the information carried via the PSFCH originally to be transmitted is "ACK", but the PSFCH is not transmitted for some reasons, if the receiving device is in "non-active" state after feeding back "ACK", although the receiving device does not expect to receive corresponding retransmission data packets at this moment, as the transmitting device does not receive "ACK", it may not clear the buffer and cancel subsequent retransmissions at the same time, which will cause the transmitting device to continue transmitting unnecessary retransmissions, thereby wasting resources and power of the transmitting device.

FIG. 5 is a schematic diagram of possible scenarios where the PSFCH is not transmitted. In NR V2X (New Radio Vehicle to Everything) of Rel-16, due to the following reasons, the PSFCH cannot be transmitted by a terminal equipment or needs to be discarded when its corresponding priority is relatively low:
if the terminal equipment intends to transmit an LTE V2X channel or signal and an NR V2X channel or signal (such as a PSFCH), there exists overlapping therebetween and the terminal equipment obtains priority information T milliseconds before, the terminal equipment transmits a channel or signal of an RAT therein with a higher priority and discards transmission of the other; wherein for a synchronous signal, its priority is indicated by a higher layer, and for a PSFCH, its priority is equal to a priority of a corresponding PSSCH or a priority of a PSSCH with a highest priority;
if the terminal equipment intends to receive an LTE V2X channel or signal and transmit an NR V2X channel or signal (such as a PSFCH), there exists overlapping therebetween and the terminal equipment obtains priority information T milliseconds before, the terminal equipment transmits or receives a channel or signal of an RAT therein with a higher priority and discards reception or transmission of the other; wherein for a synchronous signal, its priority is indicated by a higher layer, and for a PSFCH, its priority is equal to a priority of a corresponding PSSCH or a priority of a PSSCH with a highest priority, and is indicated by a PSCCH;
if the terminal equipment intends to transmit multiple PSFCHs and power is limited, the terminal equipment may preferentially transmit *N*_{Tx,PSFCH} PSFCH resources with priorities from high to low, and discard transmission of remaining PSFCHs, a rule for determining the priorities of the PSFCHs being the same as above;
if the terminal equipment intends to transmit and receive PSFCHs in two sets separately, the terminal equipment compares priorities of PSFCHs with highest priorities in the sets, transmits or receives a corresponding PSFCH set only, and discards the other set, a rule for determining the priorities of the PSFCHs being the same as above;
if the terminal equipment transmits both PSFCH (s) and UL transmission (except for PUSCH transmission scheduled by a PRACH and an RAR),
   if the PUCCH or PUSCH is configured with priority index 1,
      if *sl-PriorityThresholdULURLLC* is configured,
         if a corresponding priority of a PSSCH with a highest priority in the PSFCH is higher than *sl-PriorityThresholdULURLLC,* transmission of the PSFCH is performed preferentially (refer to the above processing);
      otherwise, UL transmission is performed preferentially;
      otherwise, UL transmission is performed preferentially;
   otherwise,
      if the corresponding priority of the PSSCH with the highest priority in the PSFCH is higher than *sl-PriorityThresholdULURLLC,* transmission of the PSFCH is performed preferentially; otherwise, UL transmission is performed preferentially.

Embodiments of this disclosure shall be described below with reference to the accompanying drawings and particular implementations.

### Embodiment of a first aspect

The embodiment of this disclosure provides a data reception method, which shall be described from a side of a first terminal equipment. In the above embodiment, the first terminal equipment is configured with SL DRX, and a second terminal equipment transmits sidelink data to the first terminal equipment. Here, the SL DRX configuration may be configured by a network device for the first terminal equipment, or may be preconfigured by the first terminal equipment. In addition, from the perspective of sidelink data transmission, the first terminal equipment in the embodiment of this disclosure is a receiving device, and the second terminal equipment is a transmitting device.

FIG. 6 is a schematic diagram of the data reception method of the embodiment of this disclosure. As shown in FIG. 6, the method includes:
601: the first terminal equipment decodes a transmission of received sidelink data transmitted by the second terminal equipment to obtain a decoding result; and
602: in a case where a sidelink feedback channel (PSFCH) used for transmitting the decoding result is unable to be transmitted, if sidelink control information to which the transmission of sidelink data received by the first terminal equipment corresponds reserves a sidelink shared channel (PSSCH) resource for a next transmission of the sidelink data, for a corresponding sidelink process, the first terminal equipment is at active time in a time unit where the reserved sidelink shared channel resource is present.

It should be noted that FIG. 6 only schematically illustrates the embodiment of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 6.

In the above embodiment, for the receiving device configured with SL DRX, if collision occurs in the corresponding PSFCH as described earlier after a PSSCH is received and the PSFCH is unable to be transmitted or is discarded due to that its priority is relatively low, for a corresponding sidelink process, the receiving device detects the corresponding PSCCH at a time unit where a corresponding next retransmission resource is present that is set to be SL DRX active time, so as to receive a corresponding retransmitted PSSCH. Here, the corresponding sidelink process refers to a sidelink process occupied by transmission (initial transmission or retransmission) of a transport block (TB) of current sidelink data, i.e. a sidelink process to which a current sidelink grant corresponds.

Therefore, it can ensure that the receiving device is able to receive the transmission of next retransmission in a case where the value that should have been fed back via the PSFCH is "NACK", thereby ensuring reliability of receiving the corresponding TB; and at the same time, in a case where the value that should have been fed back via the PSFCH is "ACK", the transmitting device is enabled as soon as possible to clear data packets to which the current TB corresponds in the buffer, thereby avoiding unnecessary retransmission.

In the embodiment of this disclosure, the above time unit may be a slot, that is, the first terminal equipment is at active time in a slot where reserved sidelink shared channel resources are located; however, this disclosure is not limited thereto, and the time unit may also be a symbol set in the slot that may be used for sidelink data transmission, i.e. a symbol set that the first terminal equipment may use for sidelink data transmission in the slot where the reserved sidelink shared channel resources are located is in active time.

In the embodiment of this disclosure, the sidelink control information is sidelink control information (SCI) in a sidelink control channel (PSCCH) corresponding to a transmission of the above sidelink data, and a sidelink shared channel resource reserved by the sidelink control information for a next transmission of the above sidelink data is also referred to as "a next retransmission resource". That is, the next retransmission resource is reserved by the SCI in the PSCCH corresponding to the PSSCH received by the receiving device.

In the embodiment of this disclosure, sidelink feedback channel (PSFCH) resources are configured in a reception resource pool of the first terminal equipment, and the control information to which the sidelink data correspond (i.e. the SCI carried by the PSCCH) indicates HARQ-ACK enabling.

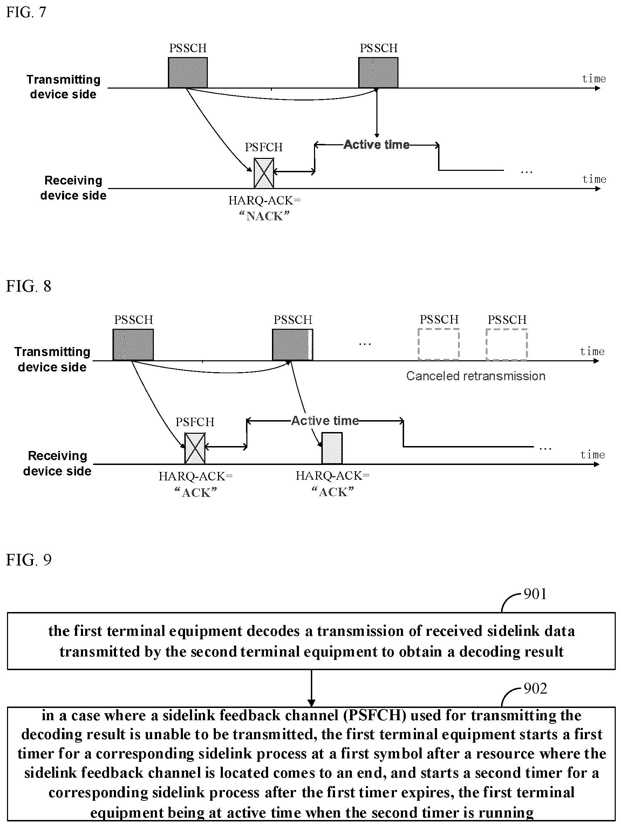

In some embodiments, a decoding result of the received sidelink data by the first terminal equipment is incorrect, i.e. the value that should have been fed back via the PSFCH is "NACK", as the first terminal equipment is at the active time in the time unit where the reserved sidelink shared channel (PSSCH) resource is located, as shown in FIG. 7, the first terminal equipment may detect a sidelink control channel (PSCCH) to which the next transmission of the sidelink data corresponds in the time unit where the reserved sidelink shared channel (PSSCH) resource is located, so as to receive the next transmission of the sidelink data. Therefore, the receiving device is at least able to receive the corresponding next retransmission, thereby achieving a correct decoding result.

In some embodiments, a decoding result of the received sidelink data by the first terminal equipment is correct, i.e. the value that should have been fed back via the PSFCH is "ACK", as the first terminal equipment is at the active time in the time unit where the reserved sidelink shared channel (PSSCH) resource is located, as shown in FIG. 8, the first terminal equipment may detect a sidelink control channel (PSCCH) to which the next transmission of the sidelink data corresponds in the time unit where the reserved sidelink shared channel (PSSCH) resource is located, so as to receive the next transmission of the sidelink data, and transmit ACK via a sidelink feedback channel (PSFCH) resource to which the reserved sidelink shared channel (PSSCH) resource corresponds. Therefore, although the receiving device has correctly decoded, it may feed back "ACK" at corresponding PSFCH resource after receiving the next retransmission of the PSSCH, so that the transmitting device clears data packets to which the current TB corresponds in the buffer, thereby avoiding unnecessary retransmission.

In the embodiment of this disclosure, if the sidelink control information to which the transmission of sidelink data received by the first terminal equipment corresponds does not reserve a sidelink shared channel resource for the next transmission of the sidelink data, the first terminal equipment starts a first timer for a corresponding sidelink process at a first symbol after a resource where the sidelink feedback channel is located comes to an end, and starts a second timer after the first timer expires, the first terminal equipment being at active time when the second timer is running.

In the above embodiment, the behaviors of SL DRX are controlled by a timer, and a current receiving device starts a timer (referred to as a first timer) for the corresponding sidelink process at the first symbol after the PSFCH resource (a corresponding PSFCH resource in which HARQ-ACK is not transmitted or is discarded) comes to an end, and starts another timer (referred to as a second timer) after the first timer expires, and when the second timer is running, the receiving device is at active time on the sidelink.

In the above embodiment, the first timer is, for example, a sidelink round-trip time timer (SL RTT timer), which may be represented as *SL-drx-HARQ-RTT-Timer;* however, this disclosure is not limited thereto, and it may also be otherwise represented. The second timer is, for example, a sidelink retransmission timer, which may be represented as *SL-drx-RetransmissionTime;* however, this disclosure is not limited thereto, and it may also be otherwise represented. The second timer is set for the first terminal equipment to receive the retransmission of the sidelink data, and the first terminal equipment is at the active time when the second timer is running.

In some embodiments, if a decoding result of the received sidelink data by the first terminal equipment is incorrect, i.e. the value that should have been fed back via the PSFCH is "NACK", as the first terminal equipment is at the active time when the second timer is running, as shown in FIG. 7, the first terminal equipment may detect a sidelink control channel (PSCCH) when the second timer is running, so as to receive the next transmission of the sidelink data. Therefore, the receiving device is at least able to receive the corresponding next retransmission, thereby achieving a correct decoding result.

In some embodiments, if a decoding result of the received sidelink data by the first terminal equipment is correct, i.e. the value that should have been fed back via the PSFCH is "ACK", as the first terminal equipment is at the active time when the second timer is running, as shown in FIG. 8, the first terminal equipment may detect a sidelink control channel (PSCCH) when the second timer is running, so as to receive the next transmission of the sidelink data, and transmit ACK via a sidelink feedback channel (PSFCH) resource to which the sidelink shared channel (PSSCH) resource corresponds after the sidelink shared channel (PSSCH) corresponding to the transmission of the sidelink feedback channel is detected. Therefore, although the receiving device has correctly decoded, it may feed back "ACK" at a corresponding PSFCH resource after receiving the next retransmission of the PSSCH, so that the transmitting device clears data packets to which the current TB corresponds in the buffer, thereby avoiding unnecessary retransmission.

In the embodiment of this disclosure, in some embodiments, after receiving the sidelink control channel corresponding to the sidelink data of the sidelink process corresponding to the second timer, if the first terminal equipment is a destination terminal indicated in the sidelink control information carried or borne by the sidelink control channel, and/or if the second terminal equipment is a source terminal indicated in the sidelink control information carried or borne by the sidelink control channel, the first terminal equipment stops the second timer that is running.

In the above embodiment, a slot refers to one belonging to a receiving resource pool of the first terminal equipment, and a symbol refers to one within the slot belonging to the receiving resource pool of the first terminal equipment that is able to be used for transmission of sidelink data.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

According to the method of the embodiment of this disclosure, in a case where a sidelink shared channel resource is reserved, a time unit where the reserved sidelink shared channel resource is located is set as the active time of the receiving device, and in a case where a sidelink shared channel resource is not reserved, the running duration of the second timer is set as the active time of the receiving device. Therefore, when the receiving device is unable to transmit or discards a PSFCH resource, when a result that should be fed back is "NACK", the receiving device may set the corresponding retransmission time to be SL DRX active time, so as to correctly receive and decode data packets of the current TB, and when the result that should be fed back is "ACK", the transmitting device is enabled to end the transmission of the current TB in advance, thereby avoiding unnecessary retransmission.

### Embodiment of a second aspect

The embodiment of this disclosure provides a data reception method, which shall be described from a side of a first terminal equipment. In the above embodiment, a second terminal equipment transmits sidelink data to the first terminal equipment, and the first terminal equipment is configured with SL DRX. Here, the SL DRX configuration may be configured by a network device for the first terminal equipment, or may be preconfigured by the first terminal equipment. In addition, from the perspective of sidelink data transmission, the second terminal equipment in the embodiment of this disclosure is a transmitting device, and the first terminal equipment is a receiving device. Contents in this embodiment identical to those in the embodiment of the first aspect shall not be described herein any further.

FIG. 9 is a schematic diagram of the data reception method of the embodiment of this disclosure. As shown in FIG. 9, the method includes:
901: the first terminal equipment decodes a transmission of received sidelink data transmitted by the second terminal equipment to obtain a decoding result; and
902: in a case where a sidelink feedback channel (PSFCH) used for transmitting the decoding result is unable to be transmitted, the first terminal equipment starts a first timer for a corresponding sidelink process at a first symbol after a resource where the sidelink feedback channel is located comes to an end, and starts a second timer for a corresponding sidelink process after the first timer expires, the first terminal equipment being at active time when the second timer is running.

It should be noted that FIG. 9 only schematically illustrates the embodiment of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 9.

In the embodiment of this disclosure, meanings of the first timer and the second timer are identical to those in the embodiment of the first aspect, and shall not be described herein any further.

In the embodiment of this disclosure, different from the embodiment of the first aspect, the running duration of the second timer is directly set to be the active time of the receiving device, regardless of whether a sidelink shared channel resource is reserved. Therefore, when a result that should be fed back is "NACK", data packets of the current TB may be correctly received and decoded, and when the result that should be fed back is "ACK", the transmitting device is enabled to end transmission of the current TB in advance, thereby avoiding unnecessary retransmission.

In some embodiments, a decoding result of the received sidelink data by the first terminal equipment is incorrect, i.e. the value that should have been fed back via the PSFCH is "NACK", as the first terminal equipment is at the active time when the second timer is running, as shown in FIG. 7, the first terminal equipment may detect a sidelink control channel (PSCCH) when the second timer is running, so as to receive the next transmission of the sidelink data. Therefore, the receiving device is at least able to receive the corresponding next retransmission, thereby achieving a correct decoding result.

In some embodiments, decoding a result of the received sidelink data by the first terminal equipment is correct, i.e. the value that should have been fed back via the PSFCH is "ACK", as the first terminal equipment is at the active time when the second timer is running, as shown in FIG. 8, the first terminal equipment may detect a sidelink control channel (PSCCH) when the second timer is running, so as to receive the next transmission of the sidelink data, and transmit ACK via a sidelink feedback channel (PSFCH) resource to which the sidelink shared channel (PSSCH) resource corresponds after the sidelink shared channel (PSSCH) corresponding to the transmission of the sidelink feedback channel is detected. Therefore, although the receiving device has correctly decoded, it may feed back "ACK" at a corresponding PSFCH resource after receiving the next retransmission of the PSSCH, so that the transmitting device clears data packets to which the current TB corresponds in the buffer, thereby avoiding unnecessary retransmission.

In the embodiment of this disclosure, in some embodiments, after receiving the sidelink control channel corresponding to the sidelink data of the sidelink process corresponding to the second timer, if the first terminal equipment is a destination terminal indicated in the sidelink control information carried or borne by the sidelink control channel, and/or if the second terminal equipment is a source terminal indicated in the sidelink control information carried or borne by the sidelink control channel, the first terminal equipment stops the second timer that is running.

In the above embodiment, a slot refers to one belonging to a receiving resource pool of the first terminal equipment, and a symbol refers to one within the slot belonging to the receiving resource pool of the first terminal equipment that is able to be used for transmission of sidelink data.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

According to the method of the embodiment of this disclosure, the running duration of the second timer is set to be the active time of the receiving device, therefore, when a result that should be fed back is "NACK", data packets of the current TB may be correctly received and decoded, and when the result that should be fed back is "ACK", the transmitting device is enabled to end transmission of the current TB in advance, thereby avoiding unnecessary retransmission.

### Embodiment of a third aspect

The embodiment of this disclosure provides a data reception method, which shall be described from a side of a first terminal equipment. In the above embodiment, a second terminal equipment transmits sidelink data to the first terminal equipment, and the first terminal equipment is configured with SL DRX. Here, the SL DRX configuration may be configured by a network device for the first terminal equipment, or may be preconfigured by the first terminal equipment. In addition, from the perspective of sidelink data transmission, the second terminal equipment in the embodiment of this disclosure is a transmitting device, and the first terminal equipment is a receiving device.

The embodiment of the third aspect may be implemented in combination with the embodiments of the first and second aspects, or may be implemented separately, with contents identical to those in the embodiments of the first and second aspects being not going to be described herein any further.

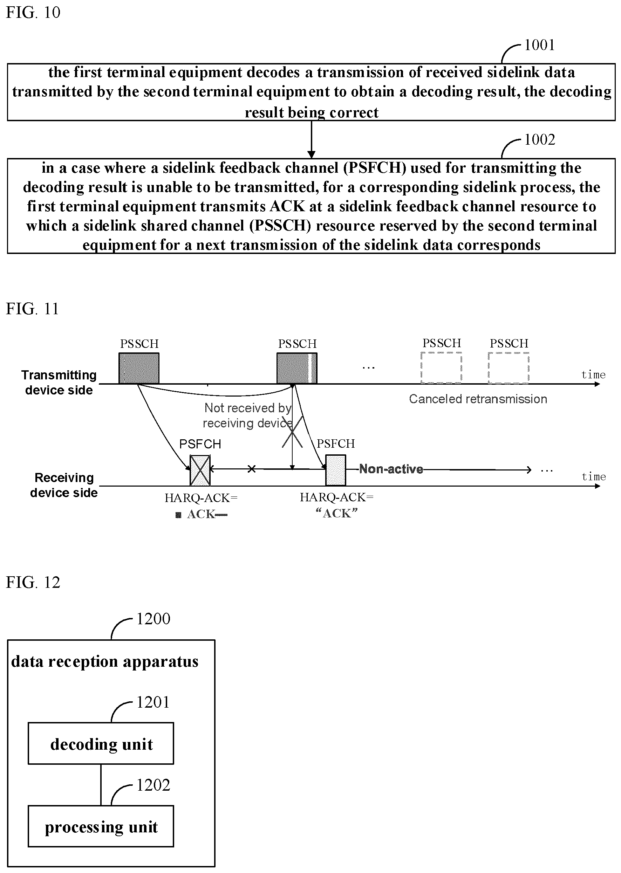

FIG. 10 is a schematic diagram of the data reception method of the embodiment of this disclosure. As shown in FIG. 10, the method includes:
1001: the first terminal equipment decodes a transmission of received sidelink data transmitted by the second terminal equipment to obtain a decoding result, the decoding result being correct; and
1002: in a case where a sidelink feedback channel (PSFCH) used for transmitting the decoding result is unable to be transmitted, for a corresponding sidelink process, the first terminal equipment transmits ACK at a sidelink feedback channel resource to which a sidelink shared channel (PSSCH) resource reserved by the second terminal equipment for a next transmission of the sidelink data corresponds.

It should be noted that FIG. 10 only schematically illustrates the embodiment of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 10.

In the above embodiment, for the receiving device configured with SL DRX, if collision occurs in the corresponding PSFCH as described earlier after a PSSCH is received and the PSSCH is unable to be transmitted or is discarded due to that its priority is relatively low, if a current receiving device decodes correctly, that is, the value that should be fed back via the PSFCH is "ACK", for a corresponding sidelink process, the receiving device does not need to set a time unit of a corresponding next retransmission resource to be SL DRX active time, and detect a corresponding PSCCH so as to receive a corresponding retransmitted PSSCH, and needs only to transmit corresponding HARQ-ACK feedback at a PSFCH resource to which a PSSCH reserved by the transmitting device for the next retransmission, with a particular value being "ACK".

Therefore, the receiving device does not need to extra add a time in "active" state in a case where the TB has been correctly decoded, thereby further saving power of the receiving device itself.

In the above embodiment, the above time unit may be a slot, that is, the receiving device does not need to be at active time in a slot where a corresponding next retransmission resource is located; however, this disclosure is not limited thereto, and the time unit may also be a symbol set in the slot that may be used for sidelink data transmission, that is, the receiving device does not need to be at active time in a symbol set that is able to be used for sidelink data transmission in the slot where the corresponding next retransmission resource is located.

In the embodiment of this disclosure, the next retransmission resource is reserved by SCI (sidelink control information) in a PSCCH (sidelink control channel) to which a PSSCH (sidelink shared channel) received by the receiving device corresponds.

In the embodiment of the disclosure, a reception resource pool of the first terminal equipment is configured with sidelink feedback channel (PSFCH) resources, and the control information to which the sidelink data correspond (i.e. the SCI carried by the PSCCH) indicates HARQ-ACK enabling.

In some embodiments, the first terminal equipment starts a first timer for a corresponding sidelink process at a first symbol after a resource where the sidelink feedback channel is located comes to an end, does not start a second timer after the first timer expires, and transmits ACK at a feedback channel resource to which the reserved sidelink shared channel resource corresponds. Hence, the second terminal equipment may clear data packets to which the current TB corresponds in the buffer. The second timer is set for the first terminal equipment to receive retransmission of the sidelink data, and the first terminal equipment being at active time when the second timer is running.

In the above embodiment, behaviors of SL DRX may be controlled by a timer, and the current receiving device starts a first timer for the corresponding SL HARQ process at the first symbol after the PSFCH resource (the PSFCH is not transmitted, or the PSFCH is a corresponding PSFCH resource discarding HARQ-ACK) comes to an end, and the receiving device does not start a second timer after the first timer expires, but transmits corresponding HARQ-ACK feedback at the PSFCH resource to which the PSSCH reserved by the transmitting device for the next retransmission corresponds, with a particular value being "ACK", as shown in FIG. 11. Therefore, after receiving the "ACK", the transmitting device clears the buffer of the sidelink process to which a current TB corresponds and does not continue to perform retransmission on a selected subsequent resource.

In the above embodiment, if the PSFCH to which the PSSCH reserved for the next retransmission corresponds is still unable to be transmitted (is omitted), the receiving device transmits ACK at the PSFCH to which the resource reserved for the further next retransmission corresponds (if any and known to the receiving device), and so on.

In the embodiment of this disclosure, meanings of the first timer and the second timer are described in the embodiment of the first aspect, and contents of which are incorporated herein, and shall not be described herein any further.

In the above embodiment, a slot refers to one belonging to a receiving resource pool of the first terminal equipment, and a symbol refers to one within the slot belonging to the receiving resource pool of the first terminal equipment that is able to be used for transmission of sidelink data.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

According to the method of the embodiment of this disclosure, if the current receiving device decodes correctly, that is, the value that should have been fed back via the PSFCH is "ACK", although the receiving device has decoded correctly, it may feed back "ACK" at a corresponding PSFCH resource after the PSSCH corresponding to the next retransmission, so that the transmitting device clears data packets corresponding the current TB in the buffer, thereby avoiding unnecessary retransmission. At the same time, the receiving device does not need to extra add a time that is in "active" state in a case where the TB has been correctly decoded, thereby further saving power of the receiving device itself.

### Embodiment of a fourth aspect

The embodiment of this disclosure provides a data reception apparatus.

FIG. 12 is a schematic diagram of the data reception apparatus of the embodiment of this disclosure. The apparatus may be, for example, a terminal equipment (such as the first terminal equipment described above), or may be one or more components or assemblies configured in the terminal equipment, with contents identical to those in the embodiment of the first aspect being not going to be described herein any further.

In the embodiment of this disclosure, the data reception apparatus is configured in the first terminal equipment, the first terminal equipment is configured with sidelink discontinuous reception, and the second terminal equipment transmits sidelink data to the first terminal equipment. As shown in FIG. 12, the data reception apparatus 1200 includes a decoding unit 1201 and a processing unit 1202.

In the embodiment of this disclosure, the decoding unit 1201 decodes a transmission of received sidelink data transmitted by the second terminal equipment to obtain a decoding result; and in a case where a sidelink feedback channel (PSFCH) used for transmitting the decoding result is unable to be transmitted, if sidelink control information to which the transmission of sidelink data received by the first terminal equipment corresponds reserves a sidelink shared channel (PSSCH) resource for a next transmission of the sidelink data, for a corresponding sidelink process, the processing unit 1202 acknowledges that the first terminal equipment is at active time in a time unit where the reserved sidelink shared channel resource is present.

In the embodiment of this disclosure, a reception resource pool of the first terminal equipment is configured with sidelink feedback channel resources, and the control information to which the sidelink data correspond indicates HARQ-ACK enabling.

In some embodiments, if the decoding result is incorrect, the processing unit 1202 determines to detect a sidelink control channel (PSCCH) to which the next transmission of the sidelink data corresponds in the time unit where the reserved sidelink shared channel resource is present, so as to receive the next transmission of the sidelink data.

In some embodiments, if the decoding result is correct, the processing unit 1202 detects a sidelink control channel to which the next transmission of the sidelink data corresponds in the time unit where the reserved sidelink shared channel resource is present, so as to receive the next transmission of the sidelink data and transmits ACK via a sidelink feedback channel resource to which the reserved sidelink shared channel resource corresponds.

In some embodiments, if the sidelink control information to which the transmission of sidelink data received by the first terminal equipment corresponds does not reserve a sidelink shared channel resource for the next transmission of the sidelink data, the processing unit 1202 starts a first timer for a corresponding sidelink process at a first symbol after a resource where the sidelink feedback channel is located comes to an end, and starts a second timer after the first timer expires, the first terminal equipment being at active time when the second timer is running.

In some embodiments, if the decoding result is incorrect, the processing unit 1202 detects a sidelink control channel when the second timer is running so as to receive the next transmission of the sidelink data.

In some embodiments, if the decoding result is correct, the processing unit 1202 detects a sidelink control channel when the second timer is running so as to receive the next transmission of the sidelink data, and after a sidelink shared channel to which the next transmission of the sidelink data corresponds is detected, transmits ACK via a sidelink feedback channel resource to which a resource of the sidelink shared channel corresponds.

In some embodiments, after the sidelink control channel corresponding to the sidelink data of the sidelink process to which the second timer corresponds is received, if the first terminal equipment is a destination terminal indicated in the sidelink control information carried by the sidelink control channel, and/or, the second terminal equipment is a source terminal indicated in the sidelink control information carried by the sidelink control channel, the processing unit 1202 terminates the running second timer.

In some embodiments, the symbol refers to a symbol able to be used for transmission of sidelink data, within a slot belonging to the reception resource pool of the first terminal equipment.

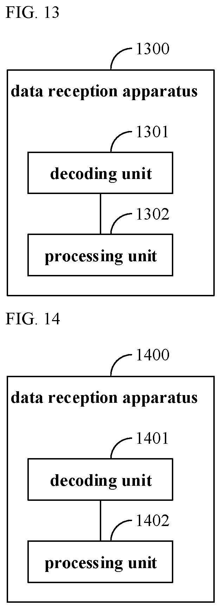

FIG. 13 is another schematic diagram of the data reception apparatus of the embodiment of this disclosure. The apparatus may be, for example, a terminal equipment (such as the first terminal equipment described above), or may be one or more components or assemblies configured in the terminal equipment, with contents identical to those in the embodiment of the second aspect being not going to be described herein any further.

**In** the embodiment of this disclosure, the data reception apparatus is configured in the first terminal equipment, the first terminal equipment is configured with sidelink discontinuous reception, and the second terminal equipment transmits sidelink data to the first terminal equipment. As shown in FIG. 13, the data reception apparatus 1300 includes a decoding unit 1301 and a processing unit 1302.

**In** the embodiment of this disclosure, the decoding unit 1301 decodes a transmission of the received sidelink data transmitted by the second terminal equipment to obtain a decoding result; and in a case where a sidelink feedback channel (PSFCH) used for transmitting the decoding result is unable to be transmitted, the processing unit 1302 starts a first timer for a corresponding sidelink process at a first symbol after a resource where the sidelink feedback channel is located comes to an end, and starts a second timer for a corresponding sidelink process after the first timer expires, the first terminal equipment being at active time when the second timer is running.

**In** some embodiments, if the decoding result is incorrect, the processing unit 1302 detects a sidelink control channel when the second timer is running so as to receive a next transmission of the sidelink data.

**In** some embodiments, if the decoding result is correct, the processing unit 1302 detects a sidelink control channel when the second timer is running so as to receive the next transmission of the sidelink data, and after a sidelink shared channel to which the next transmission of the sidelink data corresponds is detected, transmits ACK via a sidelink feedback channel resource to which a resource of the sidelink shared channel corresponds.

In some embodiments, after the sidelink control channel corresponding to the sidelink data of the sidelink process to which the second timer corresponds is received, if the first terminal equipment is a destination terminal indicated in the sidelink control information carried by the sidelink control channel, and/or, the second terminal equipment is a source terminal indicated in the sidelink control information carried by the sidelink control channel, the processing unit 1302 terminates the running second timer.

In some embodiments, the symbol refers to a symbol able to be used for transmission of sidelink data, within a slot belonging to the reception resource pool of the first terminal equipment.

FIG. 14 is a further schematic diagram of the data reception apparatus of the embodiment of this disclosure. The apparatus may be, for example, a terminal equipment (such as the first terminal equipment described above), or may be one or more components or assemblies configured in the terminal equipment, with contents identical to those in the embodiment of the third aspect being not going to be described herein any further.

In the embodiment of this disclosure, the data reception apparatus is configured in the first terminal equipment, the first terminal equipment is configured with sidelink discontinuous reception, and the second terminal equipment transmits sidelink data to the first terminal equipment. As shown in FIG. 14, the data reception apparatus 1400 includes a decoding unit 1401 and a processing unit 1402.

In the embodiment of this disclosure, the decoding unit 1401 decodes a transmission of the received sidelink data transmitted by the second terminal equipment to obtain a decoding result, the decoding result being correct; and in a case where a sidelink feedback channel (PSFCH) used for transmitting the decoding result is unable to be transmitted, for a corresponding sidelink process, the processing unit 1402 transmits ACK at a sidelink feedback channel resource to which a sidelink shared channel (PSSCH) resource reserved by the second terminal equipment for a next transmission of the sidelink data corresponds.

In the embodiment of this disclosure, a reception resource pool of the first terminal equipment is configured with sidelink feedback channel resources, and the control information to which the sidelink data correspond indicates HARQ-ACK enabling.

In some embodiments, the processing unit 1402 starts a first timer for a corresponding sidelink process at a first symbol after a resource where the sidelink feedback channel is located comes to an end, does not start a second timer after the first timer expires, and transmits ACK at a feedback channel resource to which the reserved sidelink shared channel resource corresponds, the second timer being set for the first terminal equipment to receive retransmission of the sidelink data, and the first terminal equipment being at active time when the second timer is running.

In some embodiments, the symbol refers to a symbol able to be used for transmission of sidelink data, within a slot belonging t the reception resource pool of the first terminal equipment.

The above implementations only illustrate the embodiment of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data reception apparatuses 1200/1300/1400 may further include other components or modules, and reference may be made to related techniques for particulars of these components or modules.

Furthermore, for the sake of simplicity, connection relationships between the components or modules or signal profiles thereof are only illustrated in FIGs. 12-14. However, it should be understood by those skilled in the art that such related techniques as bus connection, etc., may be adopted. And the above components or modules may be implemented by hardware, such as a processor, a memory, a transmitter, and a receiver, etc., which are not limited in the embodiment of this disclosure.

According to the embodiments of FIGs. 12 and 13 of this disclosure, it can ensure that the receiving device is able to receive the transmission of next retransmission in a case where the value that should have been fed back via the PSFCH is "NACK", thereby ensuring reliability of receiving the corresponding TB; and at the same time, in a case where the value that should have been fed back via the PSFCH is "ACK", the transmitting device is enabled as soon as possible to clear data packets to which the current TB corresponds in the buffer, thereby avoiding unnecessary retransmission. And according to the embodiment of FIG. 14, the receiving device is made to not need to extra add a time that is in "active" state in a case where the TB has been correctly decoded, thereby further saving power of the receiving device itself.

### Embodiment of a fifth aspect

The embodiment of this disclosure provides a communication system, and reference may be made to FIG. 2, with contents identical to those in the embodiments of the first to the fourth aspects being not going to be described herein any further.

In some embodiments, the communication system may at least include a first terminal equipment and a second terminal equipment, the first terminal equipment being configured with SL DRX, wherein,
the second terminal equipment transmits sidelink data to the first terminal equipment,
the first terminal equipment decodes a transmission of received sidelink data transmitted by the second terminal equipment to obtain a decoding result, and in a case where a sidelink feedback channel (PSFCH) used for transmitting the decoding result is unable to be transmitted, if sidelink control information to which the transmission of sidelink data received by the first terminal equipment corresponds reserves a sidelink shared channel (PSSCH) resource for a next transmission of the sidelink data, for a corresponding sidelink process, the first terminal equipment is at active time in a time unit where the reserved sidelink shared channel resource is present.

The second terminal equipment receives the sidelink data at the configured continuous SL DRX active time.

In some embodiments, the communication system may at least include a first terminal equipment and a second terminal equipment, the first terminal equipment being configured with SL DRX, wherein,
the second terminal equipment transmits sidelink data to the first terminal equipment,
the first terminal equipment decodes a transmission of the received sidelink data transmitted by the second terminal equipment to obtain a decoding result; and in a case where a sidelink feedback channel (PSFCH) used for transmitting the decoding result is unable to be transmitted, the first terminal equipment starts a first timer for a corresponding sidelink process at a first symbol after a resource where the sidelink feedback channel is located comes to an end, and starts a second timer for a corresponding sidelink process after the first timer expires, the first terminal equipment being at active time when the second timer is running.

In some embodiments, the communication system may at least include a first terminal equipment and a second terminal equipment, the first terminal equipment being configured with SL DRX, wherein,
the second terminal equipment transmits sidelink data to the first terminal equipment,
the first terminal equipment decodes a transmission of the received sidelink data transmitted by the second terminal equipment to obtain a decoding result, the decoding result being correct; and in a case where a sidelink feedback channel (PSFCH) used for transmitting the decoding result is unable to be transmitted, for a corresponding sidelink process, the first terminal equipment transmits ACK at a sidelink feedback channel resource to which a sidelink shared channel (PSSCH) resource reserved by the second terminal equipment for a next transmission of the sidelink data corresponds.

The embodiment of this disclosure further provides a terminal equipment; however, this disclosure is not limited thereto, and it may also be another equipment.

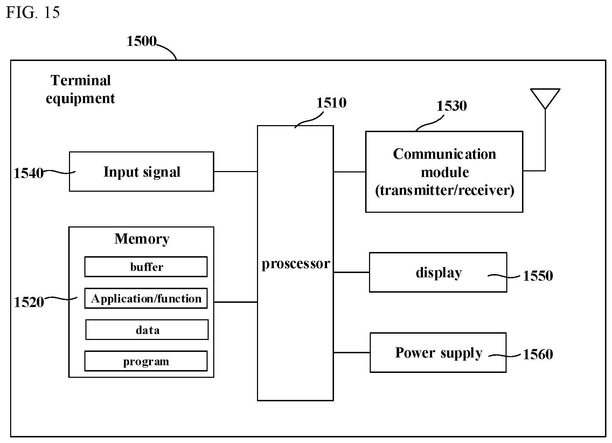

FIG. 15 is a schematic diagram of the terminal equipment of the embodiment of this disclosure. As shown in FIG. 15, the terminal equipment 1500 may include a processor 1510 and a memory 1520, the memory 1520 storing data and a program and being coupled to the processor 1510. It should be noted that this figure is illustrative only, and other types of structures may also be used, so as to supplement or replace this structure and achieve a telecommunications function or other functions.

For example, the processor 1510 may be configured to execute a program to carry out the methods as described in the embodiments of the first to third aspects.

As shown in FIG. 15, the terminal equipment 1500 may further include a communication module 1530, an input unit 1540, a display 1550, and a power supply 1560; wherein functions of the above components are similar to those in the related art, which shall not be described herein any further. It should be noted that the terminal equipment 1500 does not necessarily include all the parts shown in FIG. 15, and the above components are not necessary. Furthermore, the terminal equipment 1500 may include parts not shown in FIG. 15, and the related art may be referred to.

An embodiment of this disclosure provides a computer readable program, which, when executed in a terminal equipment, will cause the terminal equipment to carry out the methods as described in the embodiments of the first to third aspects.

An embodiment of this disclosure provides a storage medium storing a computer readable program, which will cause a terminal equipment to carry out the methods as described in the embodiments of the first to third aspects.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIGs. 12-14 may either correspond to software modules of procedures of a computer program, or correspond to hardware modules. Such software modules may respectively correspond to the operations shown in FIGs. 6, 9 and 10. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only.

## Claims

1. A data reception apparatus (1200), configured in a first terminal equipment (1500), the first terminal equipment being configured with sidelink discontinuous reception, SL DRX, the apparatus comprising:
a receiver configured to receive sidelink data from a second terminal equipment;
and
a processor configured to:
decode (601) a transmission of received sidelink data transmitted by the second terminal equipment to obtain a decoding result; and
in a case where a sidelink feedback channel, PFSCH, used for transmitting the decoding result is unable to be transmitted, if sidelink control information to which the transmission of sidelink data received by the first terminal equipment corresponds reserves a sidelink shared channel, PSSCH, resource for a next transmission of the sidelink data, for a corresponding sidelink process, acknowledge (602) that the first terminal equipment is at active time in a time unit where the reserved sidelink shared channel resource is present,
wherein the PSFCH used for transmitting the decoding result is unable to be transmitted due to uplink/sidelink, UL/SL, prioritization.

2. The apparatus (1200) according to claim 1, wherein a reception resource pool of the first terminal equipment (1500) is configured with sidelink feedback channel resources, and the control information to which the sidelink data correspond indicates hybrid automatic repeat request acknowledgement, HARQ-ACK, enabling.

3. The apparatus (1200) according to claim 1, wherein the decoding result is incorrect, the processor detects a sidelink control channel, PSCCH, to which the next transmission of the sidelink data corresponds in the time unit where the reserved sidelink shared channel resource is present, so as to receive the next transmission of the sidelink data.

4. The apparatus (1200) according to claim 1, wherein the decoding result is correct, the processor detects a sidelink control channel to which the next transmission of the sidelink data corresponds in the time unit where the reserved sidelink shared channel resource is present, so as to receive the next transmission of the sidelink data and transmits acknowledgement, ACK, via a sidelink feedback channel resource to which the reserved sidelink shared channel resource corresponds.

5. The apparatus (1200) according to claim 1, wherein if the sidelink control information to which the transmission of sidelink data received by the first terminal equipment (1500) corresponds does not reserve a sidelink shared channel resource for the next transmission of the sidelink data, the processor starts a first timer for a corresponding sidelink process at a first slot after a resource where the sidelink feedback channel is located comes to an end, and starts a second timer after the first timer expires, the first terminal equipment being at active time when the second timer is running.

6. The apparatus (1200) according to claim 5, wherein the decoding result is incorrect, the processor detects a sidelink control channel when the second timer is running so as to receive the next transmission of the sidelink data.

7. The apparatus (1200) according to claim 5, wherein the decoding result is correct, the processor detects a sidelink control channel when the second timer is running so as to receive the next transmission of the sidelink data, and after a sidelink shared channel to which the next transmission of the sidelink data corresponds is detected, transmits acknowledgement, ACK, via a sidelink feedback channel resource to which a resource of the sidelink shared channel corresponds.

8. The apparatus (1200) according to claim 5, wherein the slot refers to a slot able to be used for transmission of sidelink data, within a slot belonging to the reception resource pool of the first terminal equipment.

9. A data reception apparatus (1300), configured in a first terminal equipment (1500), the first terminal equipment being configured with sidelink discontinuous reception, SL DRX, the apparatus comprising:
a receiver configured to receive sidelink data from a second terminal equipment;
and
a processor configured to:
decode (901) a transmission of the received sidelink data transmitted by the second terminal equipment to obtain a decoding result; and
in a case where a sidelink feedback channel, PSFCH, used for transmitting the decoding result is unable to be transmitted, start (902) a first timer for a corresponding sidelink process at a first slot after a resource where the sidelink feedback channel is located comes to an end, and start a second timer for a corresponding sidelink process after the first timer expires, the first terminal equipment being at active time when the second timer is running,
wherein the PSFCH used for transmitting the decoding result is unable to be transmitted due to uplink/sidelink, UL/SL, prioritization.

10. The apparatus (1300) according to claim 9, wherein the decoding result is incorrect, the processor detects a sidelink control channel when the second timer is running so as to receive a next transmission of the sidelink data.

11. The apparatus (1300) according to claim 9, wherein
a reception resource pool of the first terminal equipment (1500) is configured with sidelink feedback channel resources,
the control information to which the sidelink data correspond indicates hybrid automatic repeat request acknowledgement, HARQ-ACK, enabling, and
the second terminal equipment transmits the sidelink data via unicast manner.

12. The apparatus (1300) according to claim 9, wherein the decoding result is correct, the processor detects a sidelink control channel when the second timer is running so as to receive the next transmission of the sidelink data, and after a sidelink shared channel to which the next transmission of the sidelink data corresponds is detected, transmits acknowledgement, ACK, via a sidelink feedback channel resource to which a resource of the sidelink shared channel corresponds.

13. The apparatus (1300) according to claim 9, wherein after the sidelink control channel corresponding to the sidelink data of the sidelink process to which the second timer corresponds is received, if the first terminal equipment (1500) is a destination terminal indicated in the sidelink control information carried by the sidelink control channel, and/or, the second terminal equipment is a source terminal indicated in the sidelink control information carried by the sidelink control channel, the processor terminates the running second timer.

14. A data reception apparatus (1400), configured in a first terminal equipment (1500), the first terminal equipment being configured with sidelink discontinuous reception, SL DRX, the apparatus comprising:
a processor configured to receive sidelink data from a second terminal equipment,
and
a processor configured to:
decode (1001) a transmission of the received sidelink data transmitted by the second terminal equipment to obtain a decoding result, the decoding result being correct; and
in a case where a sidelink feedback channel, PSFCH, used for transmitting the decoding result is unable to be transmitted, for a corresponding sidelink process, transmit (1002) acknowledgement, ACK, at a sidelink feedback channel resource to which a sidelink shared channel, PSSCH, resource reserved by the second terminal equipment for a next transmission of the sidelink data corresponds,
wherein the PSFCH used for transmitting the decoding result is unable to be transmitted due to uplink/sidelink, UL/SL, prioritization.

## Patentansprüche

1. Datenempfangseinrichtung (1200), konfiguriert in einem ersten Endgerät (1500), wobei das erste Endgerät mit diskontinuierlichem Sidelink-Empfang, SL DRX, konfiguriert ist, wobei die Einrichtung umfasst:
einen Empfänger, der konfiguriert ist, um Sidelink-Daten von einem zweiten Endgerät zu empfangen; und
einen Prozessor, der konfiguriert ist zum:
Dekodieren (601) einer Übertragung von empfangenen Sidelink-Daten, die durch das zweite Endgerät übertragen werden, um ein Dekodierungsergebnis zu erhalten; und
in einem Fall, in dem ein Sidelink-Feedbackkanal, PFSCH, der zum Übertragen des Dekodierungsergebnisses verwendet wird, nicht übertragen werden kann, wenn Sidelink-Steuerinformationen, denen die Übertragung von durch das erste Endgerät empfangenen Sidelink-Daten entspricht, eine Ressource des gemeinsamen Sidelink-Kanals, PSSCH, für eine nächste Übertragung der Sidelink-Daten reservieren, für einen entsprechenden Sidelink-Prozess, Bestätigen (602), dass sich das erste Endgerät in einer Aktivzeit in einer Zeiteinheit befindet, in der die reservierte Ressource des gemeinsamen Sidelink-Kanals vorhanden ist,
wobei der PSFCH, der zum Übertragen des Dekodierungsergebnisses verwendet wird, aufgrund von Uplink/Sidelink-, UL/SL-, Priorisierung nicht übertragen werden kann.

2. Einrichtung (1200) nach Anspruch 1, wobei ein Empfangsressourcenpool des ersten Endgeräts (1500) mit Sidelink-Feedbackkanalressourcen konfiguriert ist und die Steuerinformationen, denen die Sidelink-Daten entsprechen, Aktivierung einer hybriden automatischen Wiederholungsanforderungsbestätigung, HARQ-ACK, anzeigen.

3. Einrichtung (1200) nach Anspruch 1, wobei das Dekodierungsergebnis inkorrekt ist, der Prozessor einen Sidelink-Steuerkanal, PSCCH, dem die nächste Übertragung der Sidelink-Daten entspricht, in der Zeiteinheit detektiert, in der die reservierte Ressource des gemeinsamen Sidelink-Kanals vorhanden ist, um die nächste Übertragung der Sidelink-Daten zu empfangen.

4. Einrichtung (1200) nach Anspruch 1, wobei das Dekodierungsergebnis korrekt ist, der Prozessor einen Sidelink-Steuerkanal, dem die nächste Übertragung der Sidelink-Daten entspricht, in der Zeiteinheit detektiert, in der die reservierte Ressource des gemeinsamen Sidelink-Kanals vorhanden ist, um die nächste Übertragung der Sidelink-Daten zu empfangen, und Bestätigung, ACK, über eine Sidelink-Feedbackkanalressource überträgt, der die reservierte Ressource des gemeinsamen Sidelink-Kanals entspricht.

5. Einrichtung (1200) nach Anspruch 1, wobei, wenn die Sidelink-Steuerinformationen, denen die Übertragung von durch das erste Endgerät (1500) empfangenen Sidelink-Daten entspricht, keine Ressource des gemeinsamen Sidelink-Kanals für die nächste Übertragung der Sidelink-Daten reservieren, der Prozessor einen ersten Timer für einen entsprechenden Sidelink-Prozess an einem ersten Slot startet, nachdem eine Ressource, in der sich der Sidelink-Feedbackkanal befindet, endet, und einen zweiten Timer startet, nachdem der erste Timer abläuft, wobei sich das erste Endgerät in einer Aktivzeit befindet, wenn der zweite Timer läuft.

6. Einrichtung (1200) nach Anspruch 5, wobei das Dekodierungsergebnis inkorrekt ist, der Prozessor einen Sidelink-Steuerkanal detektiert, wenn der zweite Timer läuft, um die nächste Übertragung der Sidelink-Daten zu empfangen.

7. Einrichtung (1200) nach Anspruch 5, wobei das Dekodierungsergebnis korrekt ist, der Prozessor einen Sidelink-Steuerkanal detektiert, wenn der zweite Timer läuft, um die nächste Übertragung der Sidelink-Daten zu empfangen, und nachdem ein gemeinsamer Sidelink-Kanal, dem die nächste Übertragung der Sidelink-Daten entspricht, detektiert wird, Bestätigung, ACK, über eine Sidelink-Feedbackkanalressource überträgt, der eine Ressource des gemeinsamen Sidelink-Kanals entspricht.

8. Einrichtung (1200) nach Anspruch 5, wobei sich der Slot auf einen Slot bezieht, der für die Übertragung von Sidelink-Daten verwendet werden kann, innerhalb eines Slots, der zum Empfangsressourcenpool des ersten Endgeräts gehört.

9. Datenempfangseinrichtung (1300), konfiguriert in einem ersten Endgerät (1500), wobei das erste Endgerät mit diskontinuierlichem Sidelink-Empfang, SL DRX, konfiguriert ist, wobei die Einrichtung umfasst:
einen Empfänger, der konfiguriert ist, um Sidelink-Daten von einem zweiten Endgerät zu empfangen; und
einen Prozessor, der konfiguriert ist zum:
Dekodieren (901) einer Übertragung der empfangenen Sidelink-Daten, die durch das zweite Endgerät übertragen werden, um ein Dekodierungsergebnis zu erhalten; und
in einem Fall, in dem ein Sidelink-Feedbackkanal, PSFCH, der zum Übertragen des Dekodierungsergebnisses verwendet wird, nicht übertragen werden kann, Starten (902) eines ersten Timers für einen entsprechenden Sidelink-Prozess an einem ersten Slot, nachdem eine Ressource, in der sich der Sidelink-Feedbackkanal befindet, endet, und Starten eines zweiten Timers für einen entsprechenden Sidelink-Prozess, nachdem der erste Timer abläuft, wobei sich das erste Endgerät in einer Aktivzeit befindet, wenn der zweite Timer läuft,
wobei der PSFCH, der zum Übertragen des Dekodierungsergebnisses verwendet wird, aufgrund von Uplink/Sidelink-, UL/SL-, Priorisierung nicht übertragen werden kann.

10. Einrichtung (1300) nach Anspruch 9, wobei das Dekodierungsergebnis inkorrekt ist, der Prozessor einen Sidelink-Steuerkanal detektiert, wenn der zweite Timer läuft, um eine nächste Übertragung der Sidelink-Daten zu empfangen.

11. Einrichtung (1300) nach Anspruch 9, wobei
ein Empfangsressourcenpool des ersten Endgeräts (1500) mit Sidelink-Feedbackkanalressourcen konfiguriert ist,
die Steuerinformationen, denen die Sidelink-Daten entsprechen, Aktivierung einer hybriden automatischen Wiederholungsanforderungsbestätigung, HARQ-ACK, anzeigen, und
das zweite Endgerät die Sidelink-Daten über ein Unicast-Verfahren überträgt.

12. Einrichtung (1300) nach Anspruch 9, wobei das Dekodierungsergebnis korrekt ist, der Prozessor einen Sidelink-Steuerkanal detektiert, wenn der zweite Timer läuft, um die nächste Übertragung der Sidelink-Daten zu empfangen, und nachdem ein gemeinsamer Sidelink-Kanal, dem die nächste Übertragung der Sidelink-Daten entspricht, detektiert wird, Bestätigung, ACK, über eine Sidelink-Feedbackkanalressource überträgt, der eine Ressource des gemeinsamen Sidelink-Kanals entspricht.

13. Einrichtung (1300) nach Anspruch 9, wobei, nachdem der Sidelink-Steuerkanal, der den Sidelink-Daten des Sidelink-Prozesses entspricht, dem der zweite Timer entspricht, empfangen wird, wenn das erste Endgerät (1500) ein Zielendgerät ist, das in den Sidelink-Steuerinformationen angegeben ist, die durch den Sidelink-Steuerkanal getragen werden, und/oder das zweite Endgerät ein Quellendgerät ist, das in den Sidelink-Steuerinformationen angegeben ist, die durch den Sidelink-Steuerkanal getragen werden, der Prozessor den laufenden zweiten Timer beendet.

14. Datenempfangseinrichtung (1400), konfiguriert in einem ersten Endgerät (1500), wobei das erste Endgerät mit diskontinuierlichem Sidelink-Empfang, SL DRX, konfiguriert ist, wobei die Einrichtung umfasst:
einen Prozessor, der konfiguriert ist, um Sidelink-Daten von einem zweiten Endgerät zu empfangen, und
einen Prozessor, der konfiguriert ist zum:
Dekodieren (1001) einer Übertragung der empfangenen Sidelink-Daten, die durch das zweite Endgerät übertragen werden, um ein Dekodierungsergebnis zu erhalten, wobei das Dekodierungsergebnis korrekt ist; und
in einem Fall, in dem ein Sidelink-Feedbackkanal, PSFCH, der zum Übertragen des Dekodierungsergebnisses verwendet wird, nicht übertragen werden kann, für einen entsprechenden Sidelink-Prozess, Übertragen (1002) von Bestätigung, ACK, an einer Sidelink-Feedbackkanalressource, der eine Ressource des gemeinsamen Sidelink-Kanals, PSSCH, entspricht, die durch das zweite Endgerät für eine nächste Übertragung der Sidelink-Daten reserviert ist,
wobei der PSFCH, der zum Übertragen des Dekodierungsergebnisses verwendet wird, aufgrund von Uplink/Sidelink-, UL/SL-, Priorisierung nicht übertragen werden kann.

## Revendications

1. Appareil de réception de données (1200), configuré dans un premier équipement terminal (1500), le premier équipement terminal étant configuré avec une réception discontinue de liaison latérale, SL DRX, l'appareil comprenant :
un récepteur configuré pour recevoir des données de liaison latérale en provenance d'un second équipement terminal ; et
un processeur configuré pour :
décoder (601) une transmission de données de liaison latérale reçues transmises par le second équipement terminal pour obtenir un résultat de décodage ; et
dans le cas où un canal de rétroaction de liaison latérale, PFSCH, utilisé pour transmettre le résultat de décodage ne peut être transmis, si les informations de commande de liaison latérale auxquelles correspond la transmission de données de liaison latérale reçues par le premier équipement terminal réservent une ressource de canal partagé de liaison latérale, PSSCH, pour une prochaine transmission des données de liaison latérale, pour un processus de liaison latérale correspondant, accuser réception (602) du fait que le premier équipement terminal est actif dans une unité de temps où la ressource de canal partagé de liaison latérale réservée est présente,
dans lequel le PSFCH utilisé pour transmettre le résultat de décodage ne peut être transmis en raison de la priorisation de liaison montante/liaison latérale, UL/SL.

2. Appareil (1200) selon la revendication 1, dans lequel un ensemble de ressources de réception du premier équipement terminal (1500) est configuré avec des ressources de canal de rétroaction de liaison latérale, et les informations de commande auxquelles correspondent les données de liaison latérale indiquent une activation d'accusé de réception de requête de répétition automatique hybride, HARQ-ACK.

3. Appareil (1200) selon la revendication 1, dans lequel le résultat de décodage est incorrect, le processeur détecte un canal de commande de liaison latérale, PSCCH, auquel correspond la prochaine transmission des données de liaison latérale dans l'unité de temps où la ressource de canal partagé de liaison latérale réservée est présente, de manière à recevoir la prochaine transmission des données de liaison latérale.

4. Appareil (1200) selon la revendication 1, dans lequel le résultat de décodage est correct, le processeur détecte un canal de commande de liaison latérale auquel correspond la prochaine transmission des données de liaison latérale dans l'unité de temps où la ressource de canal partagé de liaison latérale réservée est présente, de manière à recevoir la prochaine transmission des données de liaison latérale et transmet un accusé de réception, ACK, via une ressource de canal de rétroaction de liaison latérale à laquelle correspond la ressource de canal partagé de liaison latérale réservée.

5. Appareil (1200) selon la revendication 1, dans lequel si les informations de commande de liaison latérale auxquelles correspond la transmission de données de liaison latérale reçues par le premier équipement terminal (1500) ne réservent pas une ressource de canal partagé de liaison latérale pour la prochaine transmission des données de liaison latérale, le processeur démarre un premier temporisateur pour un processus de liaison latérale correspondant à un premier intervalle après qu'une ressource où se trouve le canal de rétroaction de liaison latérale prend fin, et démarre un second temporisateur après l'expiration du premier temporisateur, le premier équipement terminal étant actif lorsque le second temporisateur est en cours d'exécution.

6. Appareil (1200) selon la revendication 5, dans lequel le résultat de décodage est incorrect, le processeur détecte un canal de commande de liaison latérale lorsque le second temporisateur est en cours d'exécution de manière à recevoir la prochaine transmission des données de liaison latérale.

7. Appareil (1200) selon la revendication 5, dans lequel le résultat de décodage est correct, le processeur détecte un canal de commande de liaison latérale lorsque le second temporisateur est en cours d'exécution de manière à recevoir la prochaine transmission des données de liaison latérale et, après la détection d'un canal partagé de liaison latérale auquel correspond la prochaine transmission des données de liaison latérale, transmet un accusé de réception, ACK, via une ressource de canal de rétroaction de liaison latérale à laquelle correspond une ressource du canal partagé de liaison latérale.

8. Appareil (1200) selon la revendication 5, dans lequel l'intervalle fait référence à un intervalle pouvant être utilisé pour la transmission de données de liaison latérale, dans un intervalle appartenant à l'ensemble de ressources de réception du premier équipement terminal.

9. Appareil de réception de données (1300), configuré dans un premier équipement terminal (1500), le premier équipement terminal étant configuré avec une réception discontinue de liaison latérale, SL DRX, l'appareil comprenant :
un récepteur configuré pour recevoir des données de liaison latérale en provenance d'un second équipement terminal ; et
un processeur configuré pour :
décoder (901) une transmission des données de liaison latérale reçues transmises par le second équipement terminal pour obtenir un résultat de décodage ; et
dans le cas où un canal de rétroaction de liaison latérale, PSFCH, utilisé pour transmettre le résultat de décodage ne peut être transmis, démarrer (902) un premier temporisateur pour un processus de liaison latérale correspondant à un premier intervalle après qu'une ressource où se trouve le canal de rétroaction de liaison latérale prend fin, et démarrer un second temporisateur pour un processus de liaison latérale correspondant après l'expiration du premier temporisateur, le premier équipement terminal étant actif lorsque le second temporisateur est en cours d'exécution,
dans lequel le PSFCH utilisé pour transmettre le résultat de décodage ne peut être transmis en raison de la priorisation de liaison montante/liaison latérale, UL/SL.

10. Appareil (1300) selon la revendication 9, dans lequel le résultat de décodage est incorrect, le processeur détecte un canal de commande de liaison latérale lorsque le second temporisateur est en cours d'exécution de manière à recevoir une prochaine transmission des données de liaison latérale.

11. Appareil (1300) selon la revendication 9, dans lequel
un ensemble de ressources de réception du premier équipement terminal (1500) est configuré avec des ressources de canal de rétroaction de liaison latérale,
les informations de commande auxquelles correspondent les données de liaison latérale indiquent l'activation d'accusé de réception de requête de répétition automatique hybride, HARQ-ACK, et
le second équipement terminal transmet les données de liaison latérale via un mode monodiffusion.

12. Appareil (1300) selon la revendication 9, dans lequel le résultat de décodage est correct, le processeur détecte un canal de commande de liaison latérale lorsque le second temporisateur est en cours d'exécution de manière à recevoir la prochaine transmission des données de liaison latérale et, après la détection d'un canal partagé de liaison latérale auquel correspond la prochaine transmission des données de liaison latérale, transmet un accusé de réception, ACK, via une ressource de canal de rétroaction de liaison latérale à laquelle correspond une ressource du canal partagé de liaison latérale.

13. Appareil (1300) selon la revendication 9, dans lequel après la réception du canal de commande de liaison latérale correspondant aux données de liaison latérale du processus de liaison latérale auquel correspond le second temporisateur, si le premier équipement terminal (1500) est un terminal de destination indiqué dans les informations de commande de liaison latérale transportées par le canal de commande de liaison latérale, et/ou, le second équipement terminal est un terminal source indiqué dans les informations de commande de liaison latérale transportées par le canal de commande de liaison latérale, le processeur met fin au second temporisateur en cours d'exécution.

14. Appareil de réception de données (1400), configuré dans un premier équipement terminal (1500), le premier équipement terminal étant configuré avec une réception discontinue de liaison latérale, SL DRX, l'appareil comprenant :
un processeur configuré pour recevoir des données de liaison latérale en provenance d'un second équipement terminal, et
un processeur configuré pour :
décoder (1001) une transmission des données de liaison latérale reçues transmises par le second équipement terminal pour obtenir un résultat de décodage, le résultat de décodage étant correct ; et
dans le cas où un canal de rétroaction de liaison latérale, PSFCH, utilisé pour transmettre le résultat de décodage ne peut être transmis, pour un processus de liaison latérale correspondant, transmettre (1002) un accusé de réception, ACK, à une ressource de canal de rétroaction de liaison latérale à laquelle correspond une ressource de canal partagé de liaison latérale, PSSCH, réservée par le second équipement terminal pour une prochaine transmission des données de liaison latérale,
dans lequel le PSFCH utilisé pour transmettre le résultat de décodage ne peut être transmis en raison de la priorisation de liaison montante/liaison latérale, UL/SL.
